# EUROPÄISCHE PATENTSCHRIFT

(11) **EP 0 659 340 B1**
(45) Veröffentlichungstag und Bekanntmachung des Hinweises auf die Patenterteilung: **05.07.2000**
(21) Anmeldenummer: 94119918.4
(22) Anmeldetag: 16.12.1994
(51) Int. Cl.: A01N 43/80

(54) **Konservierung von Säulenmaterialien in wässrigen Lösungen**
Preservation of column materials in aqueous solutions
Conservation de matériaux de colonne en solutions aqueuses

(30) Priorität: 24.12.1993 DE 4344549
(43) Veröffentlichungstag der Anmeldung: 28.06.1995
(73) Patentinhaber: Roche Diagnostics GmbH, 68298 Mannheim (DE)
(72) Erfinder: Schmidt, Axel, Dr., D-80634 München (DE); Gauhl, Helmgard, D-82327 Tutzing (DE)

(56) Entgegenhaltungen:
- EP-A- 0 398 795
- EP-A- 0 467 337
- DE-A- 2 401 608
- US-A- 4 906 651
- DATABASE WPI Week 9046, Derwent Publications Ltd., London, GB; AN 90-345639/46 & JP-A-2 250 805 (UMEKAWA) 8. Oktober 1990
- JOURNAL OF CHROMATOGRAPHY, Bd.469, 1989, AMSTERDAM, NL; Seiten 317 - 328 N. DE KRUIJF ET AL. 'Determination of preservatives in cosmetic products. II. High-Perfomance liquid chromatographic identification'
- VIA, VARIAN INSTRUMENT APPLICATION, Bd.11, Nr.3, 1977, PALO ALTO, US; Seite 10 B. WADSWORTH 'Preserving Liquid Chromatographic Column Life'

## Beschreibung

Gegenstand der Erfindung ist die Verwendung eines Gemisches von Methylisothiazolon und Bromnitrodioxan zur Konservierung von Säulenmaterialien in wässrigen Lösungen.

Säulenmaterialien in wässrigen Lösungen werden in der Hauptsache zur Isolierung von wasserlöslichen organischen Verbindungen, wie Proteinen, Nukleinsäuren und Kohlehydraten eingesetzt. Diese Verbindungen fördern das Wachstum von Mikroorganismen. Durch Spülung mit wässrigen Lösungen wird zwar versucht, die Reste der organischen Verbindungen weitestgehend von den Säulenmaterialien zu entfernen, jedoch gelingt dies oft nicht vollständig. Die so kontaminierten Säulenmaterialien sind ein idealer Nährboden für viele verschiedene Mikroorganismen, so daß schon innerhalb weniger Tage eine starke Verkeimung zu beobachten ist.

Eine Verkeimung der Säulenmaterialien hat negative Einflüsse auf die Wiederverwendung der oft sehr teuren Materialien. Dies zeigt sich beispielsweise in einer schlechteren Trenn- und/oder Flußleistung, in der Kontamination des Säulenmaterials mit Stoffwechselprodukten der Mikroorganismen, in einer Schädigung der zu trennenden Produkte wie beispielsweise im Abbau von Proteinen und Nukleinsäuren und teilweise können die Säulenmaterialien selbst durch die Verkeimung angegriffen werden. Üblicherweise wird einem Keimwachstum auf Säulenmaterialien daher vorgebeugt, indem man Biozidwirksame Lösungsmittel wie beispielsweise Alkohol oder hochkonzentrierte Salzlösungen dem Trennmaterial zusetzt. Andere bekannte Maßnahmen zur Vermeidung der Keimbildung sind, den pH-Wert auf entweder stark alkalische (> 12) oder stark saure (< 2) Werte einzustellen oder Natriumazid zuzusetzen (B. Wadsworth, Varian Instrum. Appl. Vol. 11/3, S. 10 (1977)).

Sämtliche bekannte Maßnahmen zur Verhinderung der Keimbildung sind jedoch mit Nachteilen verbunden. So müssen organische Lösungsmittel in hohen Konzentrationen eingesetzt werden (ca. 15 - 30 % ^{v}/v). Sie sind zudem teilweise schwer abbaubar und belasten dadurch die Umwelt. Außerdem sind organische Lösungsmittel mit dem Nachteil verbunden, daß durch diese manche Säulenmaterialien beschädigt werden. Hohe Salzkonzentrationen können zu unerwünschtem Auskristallieren auf den Säulenmaterialien führen. Beim Auswaschen belastet die Salzfracht die Umwelt zudem erheblich. Die Aufbewahrung bei hohen oder niedrigen pH-Werten ist nicht ungefährlich und wird von vielen Säulenmaterialien nicht vertragen. Natriumazid ist stark toxisch und mutagen (Buchberger und Kiermeier, Clin. Chem 25, S. 1514 - 5(1979); Dangerous Properties of Industrial Materials Report Vol. 10/6, S. 65-76 (1990)). Außerdem kann Natriumazid mit Schwermetallen hochexplosive Komplexe bilden. Die mikrobielle Wirksamkeit von Natriumazid ist darüber hinaus vom pH abhängig und grundsätzlich nur schwach, manche Mikroorganismen können das Azidsalz sogar verwerten (Restistenz).

Der Erfindung liegt somit die Aufgabe zugrunde, die oben geschilderten Nachteile bei der Konservierung von Säulenmaterialien in wässrigen Lösungen auszuräumen.

Die Aufgabe wird gelöst durch die Kombination (Gemisch) von 2-Methyl-4-iso-thiazolin-3-on-hydrochlorid (Methylisothiazolon) und 5-Brom-5-nitro-1,3-dioxan (Bromnitrodioxan), welches bereits in sehr geringen Einsatzkonzentrationen Säulenmaterialien wirksam gegen Verkeimung schützt. Darüber hinaus kann das Gemisch auch vorteilhaft bei bereits stark verkeimten Säulenmaterialien eingesetzt werden, wodurch sich die Keime innerhalb weniger Tage stark reduzieren lassen.

Das erfindungsgemäße Gemisch besteht bevorzugt zu etwa gleichen Teilen aus Methylisothiazolon und Bromnitrodioxan. Es sind jedoch auch Gemische bestehend aus Methylisothiazolon und Bromnitrodioxan im Verhältnis von 20:80 bis 80:20 keiminhibierend wirksam. Die aus zwei Komponenten bestehenden Gemische wirken bereits keimunterdrückend, wenn sie in Konzentrationen von mindestens 0,001% (w/v) dem wässrigen Säulenmaterial zugesetzt werden. Bevorzugt wird eine Einsatzkonzentration von ca. 0,05 % bis 0,3 % (^{w}/v) verwendet. Als besonders vorteilhaft haben sich 0,1 % (^{w}/v) eines 1:1-Gemisches Methylisothiazolon/Bromnitrodioxan zur Keiminhibierung bei Säulenmaterialien erwiesen. Dazu ist das Biozidgemisch über einen längeren Zeitraum (Monate bis Jahre) wirksam, ist praktisch ungiftig und gut abbaubar, d. h. umweltverträglich, schädigt nicht die Säulenmaterialien und kann von diesem leicht durch einfaches Waschen wieder abgetrennt werden.

Das erfindungsgemäße Biozidgemisch ist für chemisch unterschiedliche Säulenmaterialien zur Konservierung geeignet. Prinzipiell kommen alle Materialien in Frage, die sich für die Auftrennung in wässrigen Systemen eignen, wie beispielsweise Sepharose, Sephadex, Agarose, Acrylgele, Polystyrole, Gele auf Silikatbasis und andere. Es spielt dabei keine Rolle, ob die Polymeren mit Affinitätsliganden belegt sind oder Ladungen tragen.

Die erfindungsgemäße Biozidkombination kann außerdem zur Reduzierung des Keimbefalls von bereits stark verkeimten Säulenmaterialien eingesetzt werden (ca. 10⁶ bis 10⁸ Keime/ml), wobei bereits nach wenigen Tagen (ab 2 Tage, 28 °C) eine deutliche Reduktion der Keime, teilweise sogar eine völlige Keimfreiheit erreicht wird.

2-Methyl-4-isothiazolin-3-on-hydrochlorid und 5-Brom-5-nitro-1,3-dioxan sind als Substanzen an sich seit längerem bekannt und werden von verschiedenen Firmen vertrieben (z.B. Boehringer Mannheim unter dem Handelsnamen MIT bzw. Bromnitrodioxan, Bronidox K). Die Substanzen werden insbesondere als gut wirksame Biozide im kosmetischen Bereich sowie für einige technische Produkte verwendet (s. z.B. Praxis der Sterilisation, Desinfektion-Konservierung, Karl Heinz Wallhäußer, 4. Aufl., Georg Thieme Verlag Stuttgart/New York, s.445 und 534, 1988). Zudem ist die Kombination dieser Verbindungen und ihre Verwendung als Konservierungsmittel in diagnostischen Tests bekannt (EP 0 467 337).

Daß das Gemisch bestehend aus Methylisothiazolon und Bromintrodioxan einen deutlichen Biozid-wirkenden Einfluß auf Säulenmaterialien in wässrigen Lösungen hat, ist überraschend, da bei Säulenmaterialien - anders als bei in der Diagnostik üblichen Lösungen - beispielsweise Adsorptionseffekte auftreten können, die die Wirksamkeit von Bioziden herabsetzen. So kommt es mit anderen bekannten Substanzen mit Biozidwirkung zu keiner Reduktion der Keimzahl.

Nachfolgend wird die Erfindung weiter beispielhaft erläutert:

### Beispiel:

### Zur Wirkung eines erfindungsgemäßen Biozidgemisches auf verkeimtes Säulenmaterial

### Verwendetes Biozidgemisch: Methylisothiazolon/Bromnitrodioxan (9 g MIT und 10 g Bronidox K/100ml Ethanol, 96%ig)

### Verkeimtes Probenmaterial:

1) G-Gel
2) Protein A-Sepharose
   (60 Std. in Wasser bei Raumtemperatur aufbewahrt)
3) Protein A-Sepharose
   (60 Std. in 10 mM K-Phosphatpuffer pH 7,5 bei Raumtemperatur aufbewahrt)
4) DEAE-Sepharose
5) Q-Sepharose
6) Immobilisiertes Streptavidin in 20 mM Phosphatpuffer, 0.15 M NaCl, 0.05 % Natriumazid

### Vorbehandlung:

Von den Proben 1), 4) und 5) wurden je 0,75 g eingewogen, mit 3 ml steriler 0,85%iger Kochsalzlösung aufgeschlämmt und entsprechend den anderen Proben weiterverarbeitet.

Probe 3) mußte im Verhältnis 4+1 verdünnt werden, da sie sonst nicht pipettierbar war.

In den vorbereiteten Proben wurde vor einer Aufteilung in je 3x1 ml (um 3 verschiedene Biozidgemischlösungen testen zu können) der jeweilige Anfangstiter über Plattierungen auf Standard l-Nähragar und Bebrütung bei 28 °C ermittelt.

Den aufgeteilten Proben wurde das Biozidgemisch zu 0,01 - 0,04 und 0,1 % (^{w}/v) Endkonzentration zugesetzt, bei 28 °C zur Einwirkung inkubiert und der verbleibende Keimtiter anschließend wie oben beschrieben bestimmt.

| Ermittelte Keimzahlen in KBE/ml: | | | | |
|---|---|---|---|---|
| **Probe** | **Ausgangstiter** | **Zusatz von Biozidgemisch** | | |
| | | **0,01 %** | **0,04 %** | **0,1 %** |
| **1)** | > 10 log7 | unveränd. | 0 | 0 |
| **2)** | 1.2 x 10 log6 | 1.1 x 10 log4 | 4.1 x 10 log4 | 1.4 x 10 log4 |
| **3)** | 1.3 x 10 log7 | 1.3 x 10 log7 | 8.8 x 10 log4 | 0 |
| **4)** | 8.0 x 10 log7 | 8.0 x 10 log7 | 6.0 x 10 log4 | 2.0 x 10 log2 |
| **5)** | 8.0 x 10 log7 | 8.0 x 10 log7 | 9.3 x 10 log5 | 4.6 x 10 log4 |
| **6)** | > 10 log7 | unveränd. | unveränd. | unveränd. |

## Patentansprüche

1. Konserviertes Säulenmaterial in wäßriger Lösung enthaltend die bioziden Substanzen 2-Methyl-4-isothiazolin-3-on-hydrochlorid und 5-Brom-nitro-1,3-dioxan.

2. Konserviertes Säulenmaterial nach Anspruch 1, dadurch gekennzeichnet, daß die bioziden Substanzen im Verhältnis von ungefähr 1:1 vorliegen.

3. Konserviertes Säulenmaterial nach Anspruch 1 oder 2, dadurch gekennzeichnet, daß es die bioziden Substanzen in einer Wirkkonzentration von 0,001 bis 0,3 % (w/v) enthält.

4. Konserviertes Säulenmaterial nach Anspruch 1, 2 oder 3 dadurch gekennzeichnet, daß es die bioziden Substanzen in einer Wirkkonzentration von ungefähr 0,1 % (w/v) enthält.

5. Verwendung der wäßrigen Lösung enthaltend die bioziden Substanzen 2-Methyl-4-isothiazolin-3-on-hydrochlorid und 5-Brom-nitro-1,3-dioxan zur Konservierung von Säulenmaterialien in wäßrigen Lösungen.

6. Verwendung der wäßrigen Lösung enthaltend die bioziden Substanzen 2-Methyl-4-isothiazolin-3-on-hydrochlorid und 5-Brom-nitro-1,3-dioxan zur vollständigen oder teilweisen Eliminierung von Keimen in wäßrigen Lösungen von Säulenmaterialien.

## Claims

1. Preserved column material in aqueous solution containing the biocidal substances 2-methyl-4-isothiazolin-3-one hydrochloride and 5-bromo-nitro-1,3-dioxane.

2. Preserved column material as claimed in claim 1, wherein the biocidal substances are present in a ratio of approximately 1:1.

3. Preserved column material as claimed in claim 1 or 2, wherein it contains the biocidal substances at an active concentration of 0.001 to 0.3 % (w/v).

4. Preserved column material as claimed in claim 1, 2 or 3, wherein it contains the biocidal substances at an active concentration of about 0.1 % (w/v).

5. Use of the aqueous solution containing the biocidal substances 2-methyl-4-isothiazolin-3-one hydrochloride and 5-bromo-nitro-1,3-dioxane to preserve column materials in aqueous solutions.

6. Use of the aqueous solution containing the biocidal substances 2-methyl-4-isothiazolin-3-one hydrochloride and 5-bromo-nitro-1,3-dioxane for the complete or partial elimination of microbes in aqueous solutions of column materials.

## Revendications

1. Matière de colonne conservée en solution aqueuse contenant, à titre de substances biocides, le chlorhydrate de la 2-méthyl-4-isothiazolin-3-one et le 5-bromo-nitro-1,3-dioxanne.

2. Matière de colonne conservée selon la revendication 1, caractérisée en ce que les substances biocides sont présentes dans le rapport d'environ 1:1.

3. Matière de colonne conservée selon la revendication 1 ou 2, caractérisée en ce qu'elle contient les substances biocides dans une concentration active de 0,001 à 0,3% (poids/volume).

4. Matière de colonne conservée selon la revendication 1, 2 ou 3, caractérisée en ce qu'elle contient les substances biocides en une concentration active d'environ 0,1% (poids/volume).

5. Utilisation de la solution aqueuse contenant, à titre de substances biocides, le chlorhydrate de la 2-méthyl-4-isothiazolin-3-one et le 5-bromo-nitro-1,3-dioxanne pour la conservation de matières de colonnes dans des solutions aqueuses.

6. Utilisation de la solution aqueuse contenant, à titre de substances biocides, le chlorhydrate de la 2-méthyl-4-isothiazolin-3-one et le 5-bromo-nitro-1,3-dioxanne pour l'élimination complète ou partielle de germes dans des solutions aqueuses de matières de colonnes.
